# EUROPEAN PATENT APPLICATION

(11) **EP 4 636 891 A1**
(43) Date of publication of application: **22.10.2025**
(21) Application number: 23902873.1
(22) Date of filing: 10.11.2023
(51) Int. Cl.: H01M 10/0569, H01M 10/052, H01M 10/0568

(54) **LITHIUM SECONDARY BATTERY ELECTROLYTIC SOLUTION AND LITHIUM SECONDARY BATTERY INCLUDING THE SAME**

(30) Priority: 16.12.2022 JP 2022201025
(71) Applicant: Nissan Motor Co., Ltd., Kanagawa 221-0023 (JP); Renault s.a.s, 92100 Boulogne Billancourt (FR); Daikin Industries, Ltd., Osaka-shi, Osaka 530-0001 (JP)
(72) Inventor: TAKAHASHI, Shinichi, Atsugi-shi, Kanagawa 243--0123 (JP); ARIHARA, Kazuki, Atsugi-shi, Kanagawa 243--0123 (JP); TERADA, Junpei, Osaka-Shi, Osaka 530--0001 (JP); YAMAZAKI, Shigeaki, Osaka-Shi, Osaka 530--0001 (JP); HIDAKA, Tomoya, Osaka-Shi, Osaka 530--0001 (JP); FUJIWARA, Kae, Osaka-Shi, Osaka 530--0001 (JP)
(74) Representative: Grünecker Patent- und Rechtsanwälte PartG mbB
(86) International application number: PCT/IB2023/000660
(87) International publication number: WO 2024/127079

(57) **Abstract**

The object of the present invention is to provide a means capable of improving ion conductively in an electrolyte solution for lithium secondary battery.

This object can be solved by an electrolyte solution for lithium secondary battery containing a lithium salt, a carbonate-based first solvent and a fluorinated ether-based second solvent, wherein the ratio of the number of moles of the fluorinated ether-based second solvent to the number of moles of the lithium atoms in the lithium salt is 0.4 or more and 2.0 or less, and the electrolyte solution for lithium secondary battery exhibits a specific profile in its Raman spectrum measured by micro-Raman spectroscopy.

## Description

### TECHNICAL FIELD

The present invention relates to an electrolyte solution for a lithium secondary battery and a lithium secondary battery including the same.

### BACKGROUND ART

In recent years, various electric automobiles are expected to be widely used in order to solve environmental and energy problems. As an in-vehicle power supply such as a power supply for driving a motor, which is a key to the spread of these electric automobiles, development of a secondary battery has been intensively conducted. As a secondary battery, a non-aqueous electrolyte secondary battery such as a lithium secondary battery which can be expected to have a high energy density and a high output has attracted attention.

Here, JP 6569883 B2 (corresponding to US 2019/131658 A) discloses a technique relating to an electrolyte solution aimed at increasing the capacity of a lithium secondary battery. Specifically, the electrolyte solution contains an electrolyte containing a lithium salt having a specific structure, an organic solvent containing a chain carbonate having a specific structure, and an unsaturated cyclic carbonate. Then, the chain carbonate is contained at a molar ratio of 3 to 6 with respect to the lithium salt and/or the lithium salt is contained at a concentration of 1.1 to 3.8 mol/L.

### SUMMARY OF INVENTION

### Technical Problem

However, as a result of investigations by the present inventors, it has been found that the electrolyte solution described in the above-mentioned literature has a problem that the ion conductivity is low.

Therefore, an object of the present invention is to provide a means capable of improving ion conductivity in an electrolyte solution for a lithium secondary battery.

### Solution to Problem

The present inventors have conducted intensive studies in order to solve the above problem. In the process, it has been found that the ion conductivity of an electrolyte solution is significantly improved by dissolving a lithium salt in a carbonate-based solvent at a predetermined concentration to obtain a solution, and then diluting the solution using a fluorinated ether-based solvent in a predetermined amount with respect to the lithium salt to prepare an electrolyte solution. Then, the electrolyte solution was analyzed by micro-Raman spectroscopy, and found to exhibit a specific profile in a Raman spectrum, and thus the present invention was completed.

That is, one embodiment of the present invention relates to an electrolyte solution for a lithium secondary battery containing a lithium salt, a carbonate-based first solvent and a fluorinated ether-based second solvent, wherein the ratio of the number of moles of the fluorinated ether-based second solvent to the number of moles of lithium atoms contained in the lithium salt is 0.4 or more and 2.0 or less. The electrolyte solution for a lithium secondary battery is characterized in that in a Raman spectrum of micro-Raman spectroscopy, a ratio (Iu/Is) of a peak intensity Iu of a peak derived from a carbonate-based first solvent not coordinated to lithium to a peak intensity Is of a peak derived from a carbonate-based first solvent coordinated to lithium is 0.2 or more and 0.7 or less, a ratio (I_{G}/I_{S}) of a peak intensity I_{G} of a peak representing aggregation of anions to the peak intensity I_{S} is 0.01 or more and 0.3 or less, a ratio (A_{U}/A_{S0}) of a peak area Au of a peak derived from a carbonate-based first solvent not coordinated to lithium to a peak area A_{S0} of a peak derived from a carbonate-based first solvent is 0.15 or more and 0.3 or less, and a ratio (A_{G}/A_{A}) of a peak area A_{G} of a peak representing aggregation of anions to a peak area A_{A} of a peak derived from anions is 0.01 or more and 0.4 or less.

### BRIEF DESCRIPTION OF DRAWINGS

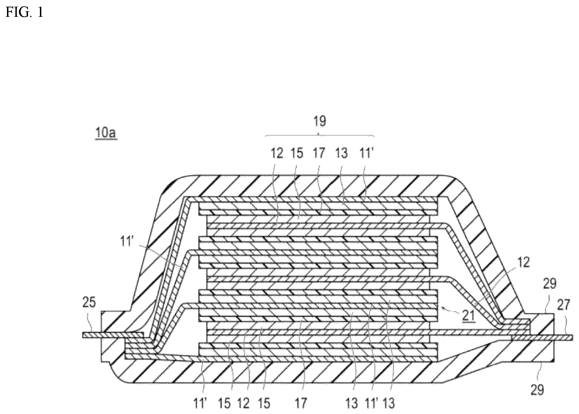

FIG. 1 is a cross-sectional view schematically showing a flat (laminate type) non-bipolar (internal parallel connection type) lithium secondary battery (hereinafter also simply referred to as "laminate type secondary battery") according to an embodiment of the present invention.

### DESCRIPTION OF EMBODIMENTS

Hereinafter, embodiments of the present invention will be described, but the technical scope of the present invention should be determined on the basis of the description of the claims, and is not limited only to the following embodiments. "X to Y" indicating a range means "X or more and Y or less". In addition, unless otherwise specified, operations and measurements of physical properties and the like are performed under the conditions of room temperature (20 to 25°C) and relative humidity of 40 to 50% RH.

### <Electrolyte solution for lithium secondary battery>

One embodiment of the present invention relates to an electrolyte solution for a lithium secondary battery (hereinafter simply referred to as "electrolyte solution") containing a lithium salt, a carbonate-based first solvent and a fluorinated ether-based second solvent, wherein the ratio of the number of moles of the fluorinated ether-based second solvent to the number of moles of lithium atoms contained in the lithium salt is 0.4 or more and 2.0 or less. The electrolyte solution for a lithium secondary battery is characterized in that in a Raman spectrum of micro-Raman spectroscopy, a ratio (Iu/Is) of a peak intensity Iu of a peak derived from a carbonate-based first solvent not coordinated to lithium to a peak intensity Is of a peak derived from a carbonate-based first solvent coordinated to lithium is 0.2 or more and 0.7 or less, a ratio (I_{G}/I_{S}) of a peak intensity I_{G} of a peak representing aggregation of anions to the peak intensity Is is 0.01 or more and 0.3 or less, a ratio (A_{U}/A_{S0}) of a peak area Au of a peak derived from a carbonate-based first solvent not coordinated to lithium to a peak area A_{S0} of a peak derived from a carbonate-based first solvent is 0.15 or more and 0.3 or less, and a ratio (A_{G}/A_{A}) of a peak area A_{G} of a peak representing aggregation of anions to a peak area A_{A} of a peak derived from anions is 0.01 or more and 0.4 or less. According to the present embodiment, it is possible to improve ion conductivity in an electrolyte solution for a lithium secondary battery. Hereinafter, the present embodiment will be described in detail.

### [Lithium salt]

The electrolyte solution according to the present embodiment contains a lithium salt as an electrolyte. The type of the lithium salt is not particularly limited, and examples thereof include Li(FSO₂)₂N (lithium bis(fluorosulfonyl)imide; LiFSI), LiN(CF₃SO₂)₂, Li(C₂F₅SO₂)₂N, LiPF₆, LiBF₄, LiClO₄, LiAsF₆, and LiCF₃SO₃. Among them, Li(FSO₂)₂N is preferable from the viewpoint that battery input/output and charge/discharge cycle characteristics can be further improved.

### [Carbonate-based first solvent]

The electrolyte solution according to the present embodiment contains a carbonate-based first solvent as an organic solvent. The type of the carbonate-based first solvent is not particularly limited as long as it has an R₁-O-(C=O)-O-R₂ structure (wherein R₁ and R₂ are each independently a monovalent organic group, and may be linked to each other to form a ring). Specific examples of the carbonate-based first solvent include dimethyl carbonate (DMC), diethyl carbonate (DEC), dipropyl carbonate (DPC), ethyl methyl carbonate (EMC), ethylene carbonate (EC), propylene carbonate (PC), butylene carbonate (BC), and fluoroethylene carbonate (FEC). Among them, a chain carbonate is preferable, at least one type selected from dimethyl carbonate (DMC), diethyl carbonate (DEC), dipropyl carbonate (DPC), and ethyl methyl carbonate (EMC) is more preferable, and dimethyl carbonate (DMC) is still more preferable from the viewpoint of further improving the fast charge characteristics and the input/output characteristics.

### [Fluorinated ether-based second solvent]

The electrolyte solution according to the present embodiment further contains a fluorinated ether-based second solvent as an organic solvent. In the electrolyte solution according to the present embodiment, it is considered that a lithium ion has a structure solvated with four carbonate-based first solvent molecules. The solvated lithium ion (hereinafter also simply referred to as "solvated Li") moves in the electrolyte solution, and thus the lithium ion moves between the electrodes. It is considered that when the electrolyte solution contains the fluorinated ether-based second solvent, the fluorinated ether-based second solvent enters between adjacent solvated Li, and the solvated Li more easily moves, so that the ion conductivity of the electrolyte solution is improved. The state of each molecule in such an electrolyte solution can be checked by a Raman spectrum described later.

The type of the fluorinated ether-based second solvent is not particularly limited as long as it has a structure in which at least some hydrogen atoms contained in an ether (R₃-O-R₄ (wherein R₃ and R₄ are each independently a monovalent organic group, and may be linked to each other to form a ring)) is fluorinated (hydrofluoroether). Specific examples of the fluorinated ether-based second solvent include 1,1,2,2-tetrafluoroethyl-2,2,2-trifluoroethyl ether, ethyl nonafluorobutyl ether, methyl tridecafluorohexyl ether, bis(2,2,2-trifluoroethyl) ether, 2,2,3,3,3-pentafluoropropyl difluoromethyl ether, 2,2,3,3,3-pentafluoropropyl-1,1,2,2-tetrafluoroethyl ether, 1,1,2,2-tetrafluoroethyl methyl ether, 1,1,2,2-tetrafluoroethyl ethyl ether, 1,1,2,2-tetrafluoroethyl-2,2,2-trifluoroethyl ether, 1,1,2,2-tetrafluoroethyl-2,2,3,3-tetrafluoropropyl ether, 1,1,1,3,3,3-hexafluoroisopropyl methyl ether, 1,1,3,3,3-pentafluoro-2-trifluoromethylpropyl methyl ether, 1,1,2,3,3,3-hexafluoropropyl methyl ether, 1,1,2,3,3,3-hexafluoropropyl ethyl ether, 2,2,3,4,4,4-hexafluorobutyl difluoromethyl ether, propyl 1,1,2,2-tetrafluoroethyl ether, butyl (1,1,2,2-tetrafluoroethyl) ether, and bis(2,2,2-trifluoroethyl) ether. Among them, from the viewpoint of being able to further improve the ion conductivity, at least one type selected from 1,1,2,2-tetrafluoroethyl-2,2,3,3-tetrafluoropropyl ether and 1,1,1,3,3,3-hexafluoroisopropyl methyl ether is preferable.

In the electrolyte solution of the present embodiment, it is essential that the ratio of the number of moles of the fluorinated ether-based second solvent to the number of moles of lithium atoms contained in the lithium salt (that is, the number of moles of lithium ions contained in the electrolyte solution) (hereinafter also simply referred to as "molar ratio") is 0.4 or more and 2.0 or less. When the molar ratio is less than 0.4, fluorinated ether-based second solvent molecules entering between adjacent solvated Li are reduced, and thus the effect of improving the ion conductivity may not be sufficiently exhibited. When the molar ratio exceeds 2.0, the proportion of the solvated Li in the electrolyte solution becomes relatively small, and thus the ion conductivity may be deteriorated. The molar ratio is preferably 0.4 or more and 1.5 or less, and more preferably 0.5 or more and 1.3 or less from the viewpoint of further improving the ion conductivity.

The concentration of lithium ions in the electrolyte solution of the present embodiment is not particularly limited, and is preferably 1.2 mol/L or more and 2.7 mol/L or less, more preferably 1.3 mol/L or more and 2.4 mol/L or less, and still more preferably 1.5 mol/L or more and 2 mol/L or less. When the concentration of lithium ions is 1.2 mol/L or more, the proportion of the carbonate-based first solvent not coordinated to lithium ions (uncoordinated solvent) decreases. As a result, the corrosion of an aluminum foil as a current collector is prevented, and the durability of the lithium secondary battery can be improved. In a high-concentration electrolyte solution, solvated Li and anions form an aggregate structure (AGG structure), and lithium ions may be less likely to move. When the concentration of lithium ions is 2.7 mol/L or less, the AGG structure is hardly formed, and lithium ions can move smoothly, so that a high ion conductivity can be exhibited.

### (Raman spectrum)

The electrolyte solution according to the present embodiment is also characterized by exhibiting a specific profile in a Raman spectrum obtained by micro-Raman spectroscopy. From the Raman spectrum, information such as whether or not the carbonate-based first solvent is coordinated to lithium ions and whether or not anions are aggregated can be read. Therefore, it is possible to determine whether or not a molecule having a specific structure is present at a predetermined proportion by checking whether or not the Raman spectrum has a specific profile.

The electrolyte solution according to the present embodiment is characterized in that in a Raman spectrum of micro-Raman spectroscopy,
(1) a ratio (Iu/Is) of a peak intensity Iu of a peak derived from a carbonate-based first solvent not coordinated to lithium to a peak intensity Is of a peak derived from a carbonate-based first solvent coordinated to lithium is 0.2 or more and 0.7 or less;
(2) a ratio (I_{G}/I_{S}) of a peak intensity I_{G} of a peak representing aggregation of anions to a peak intensity Is of a peak derived from a carbonate-based first solvent coordinated to lithium is 0.01 or more and 0.3 or less;
(3) a ratio (A_{U}/A_{S0}) of a peak area Au of a peak derived from a carbonate-based first solvent not coordinated to lithium to a peak area A_{S0} of a peak derived from a carbonate-based first solvent is 0.15 or more and 0.3 or less, and
(4) a ratio (A_{G}/A_{A}) of a peak area A_{G} of a peak representing aggregation of anions to a peak area A_{A} of a peak derived from anions is 0.01 or more and 0.4 or less. As a value of the ratio, a value measured by a method described in the below-described examples is adopted.

The electrolyte solution according to the present embodiment satisfying these characteristics has a smaller proportion of anions having an aggregation structure (AGG structure) with solvated Li as compared with a conventional electrolyte solution. As a result, lithium ions can move smoothly in the electrolyte solution, so that a high ion conductivity can be exhibited. In addition, the electrolyte solution according to the present embodiment that satisfies the above (1) to (4) has a smaller proportion of the carbonate-based first solvent not coordinated to lithium ions (uncoordinated solvent) as compared with a conventional electrolyte solution. As a result, the corrosion of an aluminum foil as a current collector is prevented, and the durability of the lithium secondary battery can be improved.

From a similar viewpoint, the electrolyte solution according to the present embodiment preferably satisfies the following characteristics:
the ratio (I_{U}/I_{S}) is 0.25 or more and 0.6 or less;
the ratio (I_{G}/I_{S}) is 0.05 or more and 0.2 or less;
the ratio (A_{U}/A_{S0}) is 0.2 or more and 0.3 or less; and
the ratio (A_{G}/A_{A}) is 0.05 or more and 0.3 or less

### <Method for producing electrolyte solution for lithium secondary battery>

A method for producing the electrolyte solution for a lithium secondary battery according to the present embodiment is not particularly limited, and it is preferable to perform the production by the following method. First, a lithium salt is dissolved in a carbonate-based first solvent to prepare an electrolyte solution precursor (first step). Subsequently, a fluorinated ether-based second solvent is added to the electrolyte solution precursor for dilution so that the ratio of the number of moles of the ether-based second solvent to the number of moles of lithium atoms contained in the lithium salt is 0.4 or more and 2.0 or less to prepare an electrolyte solution (second step). According to such a production method, a structure in which a lithium ion is solvated with four carbonate-based first solvent molecules is formed in the first step, and thereafter the fluorinated ether-based second solvent can enter between the adjacent solvated Li in the second step, so that the electrolyte solution according to the present embodiment can be easily obtained. Therefore, according to another embodiment of the present invention, there is provided a method for producing an electrolyte solution for a lithium secondary battery, which is a method for producing the electrolyte solution for a lithium secondary battery, and includes a first step of dissolving the lithium salt in the carbonate-based first solvent to prepare an electrolyte solution precursor, and a second step of adding the fluorinated ether-based second solvent to the electrolyte solution precursor for dilution so that the ratio of the number of moles of the ether-based second solvent to the number of moles of lithium atoms contained in the lithium salt is 0.4 or more and 2.0 or less to prepare an electrolyte solution. The lithium ion concentration of the electrolyte solution precursor is not particularly limited, and is preferably 1.5 mol/L or more and 3.2 mol/L or less, more preferably 1.8 mol/L or more and 3.0 mol/L or less, and still more preferably 2.0 mol/L or more and 2.5 mol/L or less.

### <Lithium secondary battery>

Since the electrolyte solution for a lithium secondary battery according to the present embodiment is excellent in ion conductivity, it is possible to improve the input/output characteristics of the battery by applying the electrolyte solution to a lithium secondary battery. In addition, by applying the electrolyte solution to a lithium secondary battery having an aluminum foil as a current collector, the corrosion of the aluminum foil is prevented, and the durability of the lithium secondary battery can be improved. Therefore, according to still another embodiment of the present invention, a lithium secondary battery including the electrolyte solution for a lithium secondary battery is provided. The lithium secondary battery according to a preferred embodiment has a current collector made of aluminum.

FIG. 1 is a cross-sectional view schematically showing a flat (laminate type) non-bipolar (internal parallel connection type) lithium secondary battery (hereinafter also simply referred to as "laminate type secondary battery") according to an embodiment of the present invention.

As shown in FIG. 1, a laminate type secondary battery 10a of the present embodiment has a structure in which a power generating element 21, which has a substantially rectangular shape, and in which a charge/discharge reaction actually proceeds, is sealed inside a laminate film 29. Here, the power generating element 21 has a configuration in which a positive electrode in which a positive electrode active material layer 13 is disposed on both surfaces of a positive electrode current collector 11', an electrolyte layer 17 including a separator containing an electrolyte solution, and a negative electrode in which a negative electrode active material layer 15 is disposed on both surfaces of a negative electrode current collector 12 are laminated. Specifically, the positive electrode, the electrolyte layer, and the negative electrode are laminated in this order such that one positive electrode active material layer 13 and the negative electrode active material layer 15 adjacent thereto face each other via the electrolyte layer 17.

Thereby, the positive electrode, the electrolyte layer, and the negative electrode constitute one single battery layer 19. Therefore, it can also be said that the laminate type secondary battery 10a shown in FIG. 1 has a configuration in which a plurality of single battery layers 19 are laminated to be electrically connected in parallel. Although the positive electrode active material layer 13 is disposed on only one surface of each of the positive electrode current collectors being the outermost layers located on both outermost layers of the power generating element 21, the active material layer may be provided on both surfaces. That is, instead of a current collector dedicated to the outermost layer in which an active material layer is provided only on one surface, a current collector having an active material layer on both surfaces may be used as it is as a current collector being the outermost layer. In addition, by reversing the arrangement of the positive electrode and the negative electrode from that in FIG. 1, the negative electrode current collector being the outermost layer may be located on both outermost layers of the power generating element 21, and the negative electrode active material layer may be disposed on one surface or both surfaces of the negative electrode current collector being the outermost layer.

The positive electrode current collector 11' and the negative electrode current collector 12 have a structure in which a positive electrode current collecting plate 25 and a negative electrode current collecting plate 27 which are electrically connected to the respective electrodes (the positive electrode and the negative electrode) are attached respectively, and led out to the outside of the laminate film 29 so as to be sandwiched between end portions of the laminate film 29. The positive electrode current collecting plate 25 and the negative electrode current collecting plate 27 may be attached to the positive electrode current collector 11' and the negative electrode current collector 12 of the respective electrodes via a positive electrode terminal lead and a negative electrode terminal lead (not illustrated), respectively, by ultrasonic welding, resistance welding, or the like as necessary.

Hereinafter, main constituent members of the lithium secondary battery according to the present embodiment will be described.

### [Current collector]

A current collector has a function of mediating transfer of electrons from an electrode active material layer. A material constituting the current collector is not particularly limited, and for example, a metal or a resin having an electrical conductivity can be adopted.

Specific examples of the metal include aluminum, nickel, iron, stainless steel, titanium, and copper. In addition to these, a clad material of nickel and aluminum, a clad material of copper and aluminum, a plating material of a combination of these metals, or the like can be preferably used. Further, a foil obtained by coating a metal surface with aluminum, or a carbon-coated aluminum foil may be used. Among them, aluminum, stainless steel, copper, and nickel are preferable from the viewpoint of an electron conductivity and a battery operating potential. In addition, by applying an aluminum foil as the current collector to the lithium secondary battery according to the present embodiment, the corrosion of the aluminum foil is prevented, and the durability of the lithium secondary battery can be improved, and thus it is more preferable to use an aluminum foil as the current collector.

Examples of the latter resin having an electrical conductivity include a resin obtained by adding a conductive filler to a conductive polymer material or a non-conductive polymer material as necessary.

The current collector may have a single-layer structure made of a single material, or may have a laminated structure in which layers made of these materials are appropriately combined. From the viewpoint of weight reduction of the current collector, it is preferable to include at least a conductive resin layer made of a resin having an electrical conductivity. In addition, from the viewpoint of blocking the movement of lithium ions between single battery layers, a metal layer may be provided on a part of the current collector.

### [Positive electrode active material layer]

The positive electrode active material layer contains a positive electrode active material, and may further contain other additives such as a conductive aid, a conductive member, and a binder as necessary. Examples of the positive electrode active material include lithium-transition metal composite oxides such as LiMn₂O₄, LiCoO₂, LiNiO₂, Li(Ni-Mn-Co)O₂, and those in which some of these transition metals are substituted with other elements, lithium-transition metal phosphate compounds, and lithium-transition metal sulfate compounds. In some cases, two or more types of positive electrode active materials may be used in combination. Preferably, from the viewpoint of capacity and input/output characteristics, a lithium-transition metal composite oxide is used as the positive electrode active material. More preferably, a composite oxide containing lithium and nickel is used. More preferably, Li(Ni-Mn-Co)O₂ and a material in which some of these transition metals are substituted with other elements (hereinafter also simply referred to as "NMC composite oxide"), a lithium-nickel-cobalt-aluminum composite oxide (hereinafter also simply referred to as "NCA composite oxide"), or the like is used. The NMC composite oxide has a layered crystal structure in which a lithium atomic layer and a transition metal (Mn, Ni, and Co are orderly arranged) atomic layer are alternately stacked with an oxygen atomic layer interposed therebetween. Then, one Li atom is contained per atom of the transition metal M, and the amount of Li that can be taken out is twice that of a spinel-based lithium manganese oxide, that is, the supply capacity is twice that of a spinel-based lithium manganese oxide, so that a high capacity can be achieved.

The average particle diameter (D50) of the positive electrode active material is preferably 1 to 100 µm, and more preferably 1 to 20 µm from the viewpoint of increasing the output. In the present description, as the average particle diameter (D50), one measured by a particle size distribution measuring apparatus of a laser diffraction/scattering method is adopted.

The thickness of the positive electrode active material layer is usually about 1 to 1,000 µm, preferably 20 to 800 µm, more preferably 30 to 500 µm, and still more preferably 40 to 200 µm.

### [Negative electrode active material layer]

The negative electrode active material layer contains a negative electrode active material, and may further contain other additives such as a conductive aid, a conductive member, and a binder as necessary. Examples of the negative electrode active material include carbon materials such as graphite, soft carbon, and hard carbon, lithium-transition metal composite oxides (for example, Li₄Ti₅O₁₂), metal materials (silicon, tin), and lithium alloy-based negative electrode materials (for example, a lithium-tin alloy, a lithium-silicon alloy, a lithium-aluminum alloy, a lithium-aluminum-manganese alloy, and the like). In some cases, two or more types of negative electrode active materials may be used in combination. Preferably, from the viewpoint of capacity and input/output characteristics, a carbon material, a metal material, a lithium-transition metal composite oxide, and a lithium alloy-based negative electrode material are preferably used as the negative electrode active material.

The average particle diameter (D50) of the negative electrode active material is not particularly limited, and is preferably 1 to 100 µm, and more preferably 1 to 20 µm from the viewpoint of increasing the output.

The thickness of the negative electrode active material layer is usually about 1 to 1,000 µm, preferably 10 to 800 µm, more preferably 15 to 600 µm, and still more preferably 20 to 200 µm.

### [Electrolyte layer]

The electrolyte layer is disposed so as to be adjacent to the electrode active material layer constituting the electrode, and has a configuration in which the separator is impregnated with the electrolyte solution for a lithium secondary battery.

The separator has a function of holding the electrolyte and ensuring the lithium ion conductivity between the positive electrode and the negative electrode, and a function as a partition wall between the positive electrode and the negative electrode. Examples of the form of the separator include a separator of a porous sheet made of a polymer or a fiber that absorbs and holds the electrolyte solution, and a nonwoven fabric separator.

### [Positive electrode current collecting plate and negative electrode current collecting plate]

As a constituent material of the current collecting plate, for example, a metal material such as aluminum, copper, titanium, nickel, stainless steel (SUS), or an alloy thereof is preferable. From the viewpoint of lightweight, corrosion resistance, and a high electrical conductivity, aluminum and copper are more preferable, and aluminum is particularly preferable. The same material may be used or different materials may be used for the positive electrode current collecting plate and the negative electrode current collecting plate.

### [Battery outer casing body]

As a battery outer casing body, a known metal can case can be used, and a bag-shaped case including a laminate film 29 containing aluminum, which can cover a power generating element as shown in FIG. 1, can be used. As the laminate film, for example, a laminate film having a three-layer structure formed by laminating PP, aluminum, and nylon in this order can be used, but the laminate film is not limited thereto.

The lithium secondary battery according to the present embodiment can exhibit excellent input/output characteristics (rate characteristics) and sufficient cycle durability. Therefore, the lithium secondary battery according to the present embodiment is suitably used as a power supply for driving an EV and an HEV.

Note that the following embodiments are also included in the scope of the present invention: the electrolyte solution for a lithium secondary battery according to claim 1 having the feature of claim 2; the electrolyte solution for a lithium secondary battery according to claim 1 or 2 having the feature of claim 3; the electrolyte solution for a lithium secondary battery according to any one of claims 1 to 3 having the feature of claim 4; the electrolyte solution for a lithium secondary battery according to any one of claims 1 to 4 having the feature of claim 5; the electrolyte solution for a lithium secondary battery according to any one of claims 1 to 5 having the feature of claim 6; and a lithium secondary battery including the electrolyte solution for a lithium secondary battery according to any one of claims 1 to 6.

### Examples

Hereinafter, the present invention will be described in more detail with reference to examples. However, the technical scope of the present invention is not limited only to the following examples. Unless otherwise specified, operations and measurements of physical properties and the like were performed under the conditions of room temperature (20 to 25°C)/relative humidity of 40 to 50% RH.

### <Preparation example of electrolyte solution for lithium secondary battery>

The electrolyte solution was prepared under the condition of a dew point of -40°C or lower.

### [Example 1]

Lithium bis(fluorosulfonyl)imide (Li(FSO₂)₂N, LiFSI) as a lithium salt was dissolved in dimethyl carbonate (DMC) as a carbonate-based first solvent so that the lithium ion concentration was 2.4 mol/L (2.4 M) to prepare an electrolyte solution precursor. To the electrolyte solution precursor, 1,1,1,3,3,3-hexafluoroisopropyl methyl ether as a fluorinated ether-based second solvent was added for dilution so that the final lithium ion concentration was 2.0 mol/L (2.0 M) to obtain an electrolyte solution for a lithium secondary battery of the present example. In the electrolyte solution, the ratio of the number of moles of 1,1,1,3,3,3-hexafluoroisopropyl methyl ether to the number of moles of lithium atoms contained in LiFSI was 0.64.

### [Example 2]

Lithium bis(fluorosulfonyl)imide (Li(FSO₂)₂N, LiFSI) as a lithium salt was dissolved in dimethyl carbonate (DMC) as a carbonate-based first solvent so that the lithium ion concentration was 3.0 mol/L (3.0 M) to prepare an electrolyte solution precursor. To the electrolyte solution precursor, 1,1,1,3,3,3-hexafluoroisopropyl methyl ether as a fluorinated ether-based second solvent was added for dilution so that the final lithium ion concentration was 2.0 mol/L (2.0 M) to obtain an electrolyte solution for a lithium secondary battery of the present example. In the electrolyte solution, the ratio of the number of moles of 1,1,1,3,3,3-hexafluoroisopropyl methyl ether to the number of moles of lithium atoms contained in LiFSI was 1.28.

### [Example 3]

Lithium bis(fluorosulfonyl)imide (Li(FSO₂)₂N, LiFSI) as a lithium salt was dissolved in dimethyl carbonate (DMC) as a carbonate-based first solvent so that the lithium ion concentration was 2.4 mol/L (2.4 M) to prepare an electrolyte solution precursor. To the electrolyte solution precursor, 1,1,2,2-tetrafluoroethyl-2,2,3,3-tetrafluoropropyl ether as a fluorinated ether-based second solvent was added for dilution so that the final lithium ion concentration was 2.0 mol/L (2.0 M) to obtain an electrolyte solution for a lithium secondary battery of the present example. In the electrolyte solution, the ratio of the number of moles of 1,1,2,2-tetrafluoroethyl-2,2,3,3-tetrafluoropropyl ether to the number of moles of lithium atoms contained in LiFSI was 0.55.

### [Example 4]

Lithium bis(fluorosulfonyl)imide (Li(FSO₂)₂N, LiFSI) as a lithium salt was dissolved in dimethyl carbonate (DMC) as a carbonate-based first solvent so that the lithium ion concentration was 2.4 mol/L (2.4 M) to prepare an electrolyte solution precursor. To the electrolyte solution precursor, 1,1,1,3,3,3-hexafluoroisopropyl methyl ether as a fluorinated ether-based second solvent was added for dilution so that the final lithium ion concentration was 1.5 mol/L (1.5 M) to obtain an electrolyte solution for a lithium secondary battery of the present example. In the electrolyte solution, the ratio of the number of moles of 1,1,1,3,3,3-hexafluoroisopropyl methyl ether to the number of moles of lithium atoms contained in LiFSI was 1.91.

### [Comparative Example 1]

Lithium bis(fluorosulfonyl)imide (Li(FSO₂)₂N, LiFSI) as a lithium salt was dissolved in dimethyl carbonate (DMC) as a carbonate-based first solvent so that the lithium ion concentration was 4.0 mol/L (4.0 M) to prepare an electrolyte solution precursor. To the electrolyte solution precursor, 1,1,1,3,3,3-hexafluoroisopropyl methyl ether as a fluorinated ether-based second solvent was added for dilution so that the final lithium ion concentration was 2.0 mol/L (2.0 M) to obtain an electrolyte solution for a lithium secondary battery of the present comparative example. In the electrolyte solution, the ratio of the number of moles of 1,1,1,3,3,3-hexafluoroisopropyl methyl ether to the number of moles of lithium atoms contained in LiFSI was 1.91.

### [Comparative Example 2]

Lithium bis(fluorosulfonyl)imide (Li(FSO₂)₂N, LiFSI) as a lithium salt was dissolved in dimethyl carbonate (DMC) as a carbonate-based first solvent so that the lithium ion concentration was 4.0 mol/L (4.0 M) to prepare an electrolyte solution precursor. To the electrolyte solution precursor, 1,1,2,2-tetrafluoroethyl-2,2,3,3-tetrafluoropropyl ether as a fluorinated ether-based second solvent was added for dilution so that the final lithium ion concentration was 2.0 mol/L (2.0 M) to obtain an electrolyte solution for a lithium secondary battery of the present comparative example. In the electrolyte solution, the ratio of the number of moles of 1,1,2,2-tetrafluoroethyl-2,2,3,3-tetrafluoropropyl ether to the number of moles of lithium atoms contained in LiFSI was 1.65.

### [Comparative Example 3]

Lithium bis(fluorosulfonyl)imide (Li(FSO₂)₂N, LiFSI) as a lithium salt was dissolved in sulfolane (SL) so that the lithium ion concentration was 4.0 mol/L (4.0 M) to prepare an electrolyte solution precursor. To the electrolyte solution precursor, 1,1,2,2-tetrafluoroethyl-2,2,3,3-tetrafluoropropyl ether was added for dilution so that the final lithium ion concentration was 2.0 mol/L (2.0 M) to obtain an electrolyte solution for a lithium secondary battery of the present comparative example. In the electrolyte solution, the ratio of the number of moles of 1,1,2,2-tetrafluoroethyl-2,2,3,3-tetrafluoropropyl ether to the number of moles of lithium atoms contained in LiFSI was 2.62.

### (Micro-Raman spectroscopy of electrolyte solution)

Micro-Raman spectroscopy was performed on each of the electrolyte solutions prepared in examples and comparative examples by the following method to acquire a Raman spectrum. First, in a glove box in an argon atmosphere having a dew point of -68°C or lower, an electrolyte solution was dropped into a container made of aluminum, and the container was set on a stainless steel jig with a glass window that enables measurement in an environment unexposed to air, and sealed in an argon atmosphere. The jig was taken out from the glove box and set in a micro-Raman spectrometer (manufactured by JEOL Ltd.). The measurement conditions were as follows: a 100x objective lens was used, a laser having a wavelength of 532 nm was used for incident light, and a slit width was set to 0.1 mm. The measurement range was set to 0 to 4,000 cm⁻¹, the measurement time was set to 10 seconds, and the cumulative number of times was set to 24 times. From the Raman spectrum thus obtained, a peak (peak U) derived from the carbonate-based first solvent not coordinated to lithium in the vicinity of 912 cm⁻¹, a peak (peak S) derived from the carbonate-based first solvent coordinated to lithium in the vicinity of 932 cm⁻¹, a peak (peak G) representing aggregation of anions in the vicinity of 730 to 770 cm⁻¹, and a peak (peak A) derived from anions in the vicinity of 720 cm⁻¹ were fitted in a normal distribution. Then, for each of the peaks after fitting, the peak intensity and the peak area were calculated. The peak area A_{S0} of the peak derived from the carbonate-based first solvent was calculated by adding the peak area As of the peak S and the peak area Au of the peak U. The results are shown in Table 1 below.

When the types (chemical structures) of the lithium salt, the carbonate-based first solvent, and the fluorinated ether-based second solvent are different, the position (Raman shift) of each of the peak U, the peak S, the peak G, and the peak A may change. In this case, by comparing the Raman spectrum of the electrolyte solution with the Raman spectrum of each component, it is possible to easily identify which peak is derived from which component.

### (Evaluation of ion conductivity σ)

The ion conductivity at room temperature (25°C) of each of the electrolyte solutions prepared in examples and comparative examples was measured by the following method. First, SUS plates having diameter of 10 mm were disposed at a distance of 10 mm using a jig for measurement. In a glove box in an argon atmosphere having a dew point of -68°C or lower, 1.5 mL of an electrolyte solution was injected into the jig. By electrochemical impedance spectroscopy, the AC impedance was measured while changing the frequency from 100 mHz to 300 kHz under the condition of an open circuit voltage and a potential amplitude of 10 mV, and the solution resistance was calculated from the intersection with the real axis. At that time, correction was made with a cell constant which was separately measured with a standard solution (a solution obtained by dissolving LiPF₆ at a concentration of 1 mol/L in a mixed solvent of EC : DEC = 3 : 7 (volume ratio)). The ion conductivity was calculated from the obtained solution resistance value. The results are shown in Table 1 below.

### (Evaluation of cycle durability)

Lithium secondary batteries were prepared by the following method using each of the electrolyte solutions prepared in examples and comparative examples, and cycle durability was evaluated.

A solid content containing 95 mass% of a positive electrode active material (LiNi_{0.80}Mn_{0.10}Co_{0.10}O₂), 3 mass% of carbon black as a conductive aid, and 2 mass% of polyvinylidene fluoride (PVdF) as a binder was prepared. An appropriate amount of N-methyl-2-pyrrolidone (NMP) as a slurry viscosity adjusting solvent was added to the solid content and mixed to prepare a positive electrode active material slurry. Subsequently, the obtained positive electrode active material slurry was applied to one surface of an aluminum foil (thickness: 20 µm) as a current collector using a doctor blade, and dried on a hot plate at 80°C for 1 hour. Thereafter, the obtained laminate was pressed using a roll press machine to control the porosity of the positive electrode active material layer to 25%. Then, the resultant was placed in a vacuum dryer and dried at 130°C for 8 hours under vacuum conditions to prepare a positive electrode (weight per unit area: 30 mg/cm²).

A solid content containing 95.5 mass% of graphite (average particle diameter: 20 µm) as a negative electrode active material, 0.5 mass% of carbon black as a conductive aid, and 4 mass% of polyvinylidene fluoride (PVdF) as a binder was prepared. An appropriate amount of N-methyl-2-pyrrolidone (NMP) as a slurry viscosity adjusting solvent was added to the solid content and mixed to prepare a negative electrode active material slurry. Subsequently, the obtained negative electrode active material slurry was applied to one surface of a copper foil (thickness: 20 µm) as a current collector, and subjected to drying and pressing in the same manner as described above to prepare a negative electrode (weight per unit area: 20 mg/cm², porosity: 23%).

The positive electrode obtained above was cut into a square having a size of 12 cm², and the negative electrode was cut into a square having a size of 13 cm². An aluminum foil with an aluminum terminal was laminated on the current collector (aluminum foil) of the positive electrode. On the other hand, a copper foil with a nickel terminal was laminated on the current collector (copper foil) of the negative electrode.

Subsequently, a separator (manufactured by Celgard Inc., made of polypropylene (PP)) was inserted into the electrode active material layer side of the positive electrode and the negative electrode to form a laminate. This laminate was sandwiched between heat-sealable aluminum laminate films (thickness: 150 µm) as an outer body, and the electrolyte solution prepared above was injected, and then, the inside of the outer body was depressurized to vacuum using a vacuum sealer, and the reduced pressure was released and returned to atmospheric pressure, and then the inside of the outer body was depressurized again to a degree of vacuum of 99.7% and sealed to prepare a pouch-type lithium secondary battery (test cell) having a power generating element in which a positive electrode active material layer and a negative electrode active material layer were laminated so as to face each other via a separator.

The test cell prepared above was subjected to a charge/discharge cycle durability test. Specifically, first, in order to uniformly apply pressure in the electrode reaction surface, the electrode portion of the cell was sandwiched between rubber plates, and further sandwiched between aluminum plates and fixed with bolts.

The first and second charge and discharge were then performed at a rate of 0.1 C. At this time, charge was performed in a CC-CV (1/100C cut-off) mode, and discharge was performed in a CC mode (pause time between charge and discharge: 8 hours) in a cell voltage range of 2.5 to 4.3 V. Thereafter, 100 cycles of charge and discharge were performed at a rate of 0.33 C in the same cell voltage range as described above. Then, the ratio of the discharge capacity at the 100th cycle to the discharge capacity at the 1st cycle was calculated as a capacity retention rate [%] during cycle durability. The results are shown in Table 1 below.

### [Table 1]

**Table 1**

| | Electrolyte solution | | | | | | Raman spectrum | | | | Evaluation | |
|---|---|---|---|---|---|---|---|---|---|---|---|---|
| | Concentration (M) | Lithium salt | First solvent | Second solvent | Second solvent/Li molar ratio | Preparation conditions | I_{U}/I_{S} | I_{G}/I_{S} | A_{U}/A_{S0} | A_{G}/A_{A} | σ (mS/cm) | Capacity retention rate during cycle durability (%) |
| Example 1 | 2.0 | LiFSI | DMC | 1,1,1,3,3,3-hexafluoroisopropyl methyl ether | 0.64 | Diluted to 2.4 M | 0.38 | 0.19 | 0.24 | 0.23 | 8.39 | 87.3 |
| Example 2 | 2.0 | LiFSI | DMC | 1,1,1,3,3,3-hexafluoroisopropyl methyl ether | 1.28 | Diluted to 3.0 M | 0.39 | 0.16 | 0.25 | 0.19 | 6.51 | 89.9 |
| Example 3 | 2.0 | LiFSI | DMC | 1,1,2,2-tetrafluoroethyl-2,2,3,3-tetrafluoropropyl ether | 0.55 | Diluted to 2.4 M | 0.28 | 0.09 | 0.22 | 0.10 | 6.93 | 86.1 |
| Example 4 | 1.5 | LiFSI | DMC | 1,1,1,3,3,3-hexafluoroisopropyl methyl ether | 1.91 | Diluted to 2.4 M | 0.54 | 0.12 | 0.21 | 0.09 | 7.39 | 76.4 |
| Comparative Example 1 | 2.0 | LiFSI | DMC | 1,1,1,3,3,3-hexafluoroisopropyl methyl ether | 1.91 | Diluted to 4.0 M | 0.14 | 0.37 | 0.10 | 0.57 | 3.28 | 88.3 |
| Comparative Example 2 | 2.0 | LiFSI | DMC | 1,1,2,2-tetrafluoroethyl-2,2,3,3-tetrafluoropropyl ether | 1.65 | Diluted to 4.0 M | 0.12 | 0.71 | 0.11 | 1.00 | 1.63 | 80.3 |
| Comparative Example 3 | 2.0 | LiFSI | SL | 1,1,2,2-tetrafluoroethyl-2,2,3,3-tetrafluoropropyl ether | 2.62 | Diluted to 4.0 M | 3.33 | 0.65 | 0.79 | 0.59 | 0.73 | 26.5 |

The results shown in Table 1 showed that the ion conductivity was improved in the electrolyte solution for a lithium secondary battery according to the present invention. It was also found that the lithium secondary battery including the electrolyte solution had sufficient cycle durability.

The present application is based on Japanese Patent Application No. 2022-201025, which has been filed on December 16, 2022, and the disclosure content of which is incorporated herein by reference in its entirety.

### Reference Signs List

- 10a: Laminate type secondary battery
- 11': Positive electrode current collector
- 12: Negative electrode current collector
- 13: Positive electrode active material layer
- 15: Negative electrode active material layer
- 17: Electrolyte layer
- 19: Single battery layer
- 21: Power generating element
- 25: Positive electrode current collecting plate (positive electrode tab)
- 27: Negative electrode current collecting plate (negative electrode tab)
- 29: Laminate film

## Claims

1. An electrolyte solution for a lithium secondary battery, comprising
a lithium salt, a carbonate-based first solvent, and a fluorinated ether-based second solvent, wherein
a ratio of a number of moles of the fluorinated ether-based second solvent to a number of moles of lithium atoms contained in the lithium salt is 0.4 or more and 2.0 or less,
in a Raman spectrum of micro-Raman spectroscopy, a ratio (I_{U}/I_{S}) of a peak intensity Iu of a peak derived from a carbonate-based first solvent not coordinated to lithium to a peak intensity Is of a peak derived from a carbonate-based first solvent coordinated to lithium is 0.2 or more and 0.7 or less,
a ratio (I_{G}/I_{S}) of a peak intensity I_{G} of a peak representing aggregation of anions to the peak intensity Is is 0.01 or more and 0.3 or less,
a ratio (A_{U}/A_{S0}) of a peak area Au of a peak derived from a carbonate-based first solvent not coordinated to lithium to a peak area A_{S0} of a peak derived from a carbonate-based first solvent is 0.15 or more and 0.3 or less, and
a ratio (A_{G}/A_{A}) of a peak area A_{G} of a peak representing aggregation of anions to a peak area A_{A} of a peak derived from anions is 0.01 or more and 0.4 or less.

2. The electrolyte solution for a lithium secondary battery according to claim 1, wherein a ratio of a number of moles of the fluorinated ether-based second solvent to a number of moles of lithium atoms contained in the lithium salt is 0.4 or more and 1.5 or less.

3. The electrolyte solution for a lithium secondary battery according to claim 1 or 2, wherein
the ratio (I_{U}/I_{S}) is 0.25 or more and 0.6 or less,
the ratio (I_{G}/I_{S}) is 0.05 or more and 0.2 or less,
the ratio (A_{U}/A_{S0}) is 0.2 or more and 0.3 or less, and
the ratio (A_{G}/A_{A}) is 0.05 or more and 0.3 or less.

4. The electrolyte solution for a lithium secondary battery according to claim 1 or 2, wherein the lithium salt is lithium bis(fluorosulfonyl)imide.

5. The electrolyte solution for a lithium secondary battery according to claim 1 or 2, wherein the carbonate-based first solvent is dimethyl carbonate.

6. The electrolyte solution for a lithium secondary battery according to claim 1 or 2, wherein the fluorinated ether-based second solvent is at least one type selected from 1,1,2,2-tetrafluoroethyl-2,2,3,3-tetrafluoropropyl ether and 1,1,1,3,3,3-hexafluoroisopropyl methyl ether.

7. A lithium secondary battery comprising the electrolyte solution for a lithium secondary battery according to claim 1 or 2.
